# EUROPEAN PATENT APPLICATION

(11) **EP 1 281 637 A1**
(43) Date of publication of application: **05.02.2003**
(21) Application number: 02255232.7
(22) Date of filing: 26.07.2002
(51) Int. Cl.: B65D 90/04, B65G 67/20, B60P 3/42, B65F 9/00

(54) **Material and waste transportation**

(30) Priority: 30.07.2001 GB 0118556
(71) Applicant: Sumpter, Derek Edward, Shorne, Gravesend DA12 3HG (GB)
(72) Inventor: Sumpter, Derek Edward, Shorne, Gravesend DA12 3HG (GB)
(74) Representative: Bailey, David Martin

(57) **Abstract**

The present invention relates to material and waste transportation, in particular including an improved routine for delivery of newsprint and the removal of waste paper and apparatus for use in such a routine and other situations. There is described a trailer of generally standard construction characterised in that the trailer is further provided with two or more tracks or rails mounted within the trailer adjacent the roof thereof running substantially the whole length of the trailer. There is also described in combination, a trailer and one or more bags, the bags being open at the top and being dimensioned in width and height as to correspond to the height and width of the trailer. Typically the depth, front to back, of the backs is generally similar to the width thereof, but this is not essential. The bags are also provided with means for securing the bags to the rails in a manner such that the bags are movable from a configuration in which all the bags are closed and compressed against each other adjacent the rear doors of the trailer, to a configuration in which the bags are all open with the rear wall of a first bag being adjacent the rear wall of the trailer and the front wall of a final bag being adjacent the front access door ofthe trailer. Preferably, the bag securing means is adapted to operate in such a manner that each bag is opened sequentially.

## Description

The present invention relates to material and waste transportation, in particular including an improved routine for delivery of newsprint and the removal of waste paper and apparatus for use in such a routine and other situations.

Transportation of goods by road is normally conducted using large articulated lorries having a trailer hauled by a tractor unit. Typically, having delivered its load, the lorry returns to its home depot empty. This is wasteful of driver and vehicle time, being a period of zero productivity, and is also a waste of fuel, thus raising environmental concerns. The government is keen to encourage hauliers to use full trailers on the return leg of each journey. However, whilst being an admirable aim, it is, in practice, difficult to achieve, for several reasons. Products made by the concern to whom the delivery was made may not require transportation of its own goods in the direction of the lorry's home depot. Furthermore, trailers may be designed specifically for transporting a certain type of product and are not readily adaptable to carrying other goods.

In the newsprint industry, reels of newsprint are typically delivered to a printing works on a trailer with fabric side curtains carried upon a steel frame, typically known as a "Tautliner". Printing works produce a great deal of waste paper. Typically, on a continuous basis as it is produced, a compactor unit compresses waste paper into a 20 foot long bin. Typically, two bins are transported for disposal or recycling upon a single trailer. The trailer will be different from that used to deliver the newsprint. Typically, approximately six of these bins are required to contain the waste generated at a newspaper printing works from processing the newsprint of a single delivery of a typical 13m trailer. Each bin in turn must be mounted upon and demounted from the trailer using a hook lift vehicle before the contents can be disposed of The system is generally similar to that in our copending application GB 2 307 895A. This procedure is unduly time consuming involving many movements of bins. This additionally produces a considerable amount of noise.

It is with these problems in mind, particularly with reference to the newsprint industry, that the present invention has been devised.

Our earlier application EP-A 1 061 012 already addresses this problem and describes a material delivery and waste collection system for a premises; the system comprising (i) providing at least two, wheeled, enclosed elongate material-carrying containers each having a floor, walls, a roof and an access door mounted within a frame at the rear of the container; (ii) providing the premises with a delivery bay for transfer of materials from the rear of a first container into the premises; and (iii) providing the premises with at least one waste collection bay; wherein the waste collection bay includes a compactor unit having an input adapted to receive waste material and an output for expulsion of the waste material; the system comprising mutually cooperating connecting means provided on the compactor units and on the rear of the second container; the connecting means providing a substantially rigid connection between the output of the compactor unit and the container. Preferably, the wheeled container is in the form of a trailer of an articulated lorry.

EP-A 1 061 012 also describes a trailer for an articulated lorry adapted for use in the system described above. The trailer comprises an enclosed elongate material-carrying container having a floor, walls, a roof and an access door mounted within a frame at the rear of the trailer; wherein the interior surfaces of the walls and roof are substantially flat and uninterrupted and the floor includes a plurality of longitudinally extending guide tracks; wherein further, the rear of the trailer comprises cooperative means for connecting the trailer to the output of a compactor unit. The trailer further comprises means for discharging waste material from the interior of the container. Typically, the container is mounted at the rear of the trailer upon a chassis for pivotal movement with respect thereto. Alternatively, the container may include a tipping ram to tilt the trailer thereby discharging the contents. Preferably, the access door is a vertically slidable door and the frame is itself in the form of an outwardly opening door.

Further development work led to the appreciation that the system and trailer could be further modified to avoid the requirement for the premises to have compactor units and this is described in detail in our subsequent application EP-A 1 120 363. The material delivery and waste collection system for a premises described comprises (i) at least two, wheeled, enclosed elongate material-carrying containers each having a walking floor, walls, a roof and an access door, (ii) providing the premises with a delivery bay for transfer of materials from a first such container into the premises; and (iii) providing the premises with at least one waste collection bay wherein the waste collection bay includes an output for expulsion of the waste material into a second such container. EP 1 120 363 also describes a trailer for an articulated lorry adapted for use in the system described above. The trailer comprises an enclosed elongate material-carrying container having a walking floor, a rear and two side walls, a roof and a front access door. The interior surfaces of the walls and roof are substantially flat and un-interrupted and the interior of the trailer includes a moveable wall or headboard which is advanceable between a position adjacent the access door in which the capacity of the container is at a minimum and a position remote the access door in which the capacity ofthe container is at a maximum. The trailer is characterised in that it further comprises a door in the roof of the vehicle, the door being horizontally slidable.

The term walking floor, when used herein, means a floor comprising a plurality of parallel longitudinal floor elements or slats arranged to reciprocate so as to produce a walking effect, whereby an article placed upon the floor is caused to advance in a chosen direction. Such arrangements are well known in the field of trailers. A vehicle having such a walking floor is described in US 5551824, to which further reference should be made. The term is also intended to cover other arrangements which produce this effect. Examples of alternative arrangements are shown in EP 0081695, US 3998343 and US 4747747 to which further reference should also be made. These publications also describe the use of moveable walls or headboards.

However, whilst these improvements address many of the problems and inefficiencies in the waste paper transportation process, they do not provide a solution to all the problems. In particular, often waste paper is exported for recycling. As such, the waste paper cannot simply be unloaded from the trailer into a processing plant. Conventionally, the paper is unloaded from the trailer onto the ground from where a truck scoops the paper up and loads it into a compactor. The compactor compresses the paper into a bale which held as a bale by means of wires or plastics straps. The bale is then wrapped in plastics film for protection. A plurality of such bales are then loaded on board a ship for transport to a port convenient to a paper recycling plant. Such a process is time consuming, involving many labour intensive operations and results in a product, the bale, which must be stripped of its plastic film cover and wire before the paper can be processed. The process is also expensive. Baling costs, excluding costs of transfer from the lorry, are estimated to be of the order of £20 per tonne of paper baled.

It is with regard to these disadvantages that the present invention has been devised.

According to the present invention, there is provided a trailer substantially as described above; characterised in that the trailer is further provided with two or more tracks or rails mounted within the trailer adjacent the roof thereof running substantially the whole length of the trailer.

The present invention also provides, in combination, a trailer as described above and one or more bags, the bags being open at the top and being dimensioned in width and height as to correspond to the height and width of the trailer. Typically the depth, front to back, of the backs is generally similar to the width thereof, but this is not essential. The bags are also provided with means for securing the bags to the rails in a manner such that the bags are movable from a configuration in which all the bags are closed and compressed against each other adjacent the rear doors of the trailer, to a configuration in which the bags are all open with the rear wall of a first bag being adjacent the rear wall of the trailer and the front wall of a final bag being adjacent the front access door of the trailer. Preferably, the bag securing means is adapted to operate in such a manner that each bag is opened sequentially.

The rails may be adapted, for example, by telescoping, to be extendable through the rear doors of the trailer when open.

Preferably, the trailer includes an aperture in the roof, thereof at a position generally adjacent said second of the container said second end being closable by means of slidable cover.

The above and other aspects of the present invention will now be described in further detail by way of example only with reference to the accompanying drawings, in which:
- Figure 1: is a rear view of a trailer in accordance with the present invention;
- Figure 2: is a side view of one embodiment of a trailer in accordance with the present invention;
- Figure 3: is a side view of another embodiment of a trailer in accordance with the present invention;
- Figure 4: is a part cut-away side view of the embodiment of Figure 3;
- Figure 5: is a detailed perspective view of the mounting arrangement of the roof hatch ofthe trailer of Figure 3;
- Figure 6: is a side view of the hatch mounting rails of the trailer of Figure 5;
- Figure 7: is a part cut-away plan view of the trailer of Figure 3;
- Figure 8: is a schematic plan view illustrating the process of the present invention; and
- Figure 9: shows in 6 side views, the application of the process of the present invention to a trailer of the present invention.

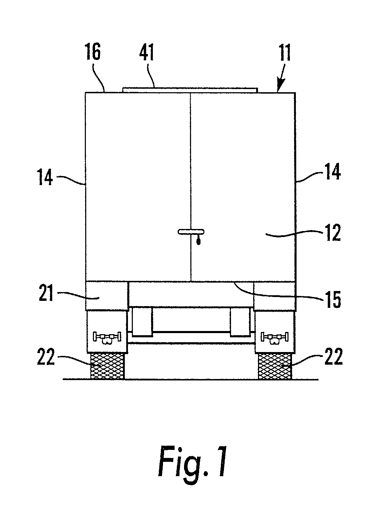

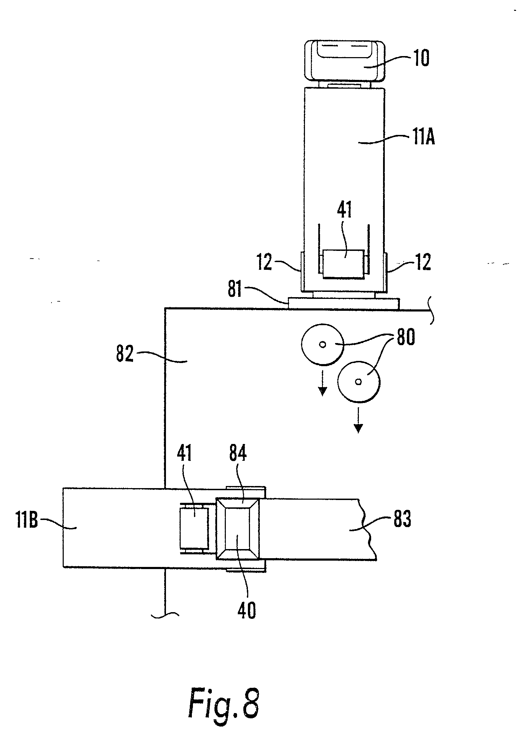

With reference to Figures 1 to 7, the trailer, shown generally at 11, for a lorry tractor unit 10 (Figure 8) will be explained. Firstly, it will be helpful to define that in the context of trailers, the terms 'front' and 'rear' are with respect to the conventional access doors 12, which are taken to be at the front of the trailer. The trailer 11 comprises a container 13 defined by two side walls 14, floor 15, roof 16, end or rear wall 17 and the front doors 12.

As illustrated, front doors 12 are of the type which pivot about a vertical axis. The present invention is equally applicable to trailers which include other door arrangements such as half or full-height roller door arrangements.

Many features of the trailer 11 are largely conventional and do not need to be described in further detail. Indeed, this is a particular advantage of the present system and trailer. The container 13 is mounted for pivotal movement about an axial horizontal axis 20 upon a chassis 21. Chassis 21 includes additional conventional trailer components such as three pairs of road wheels 22 and front 23 and rear 24 support legs for use when the trailer is not coupled to a tractor unit. Pivotal movement is actuated by means of a pneumatic or hydraulic piston 25, generally vertically mounted but adapted to pivot as required during extension thereof and thus pivoting of the container 13.

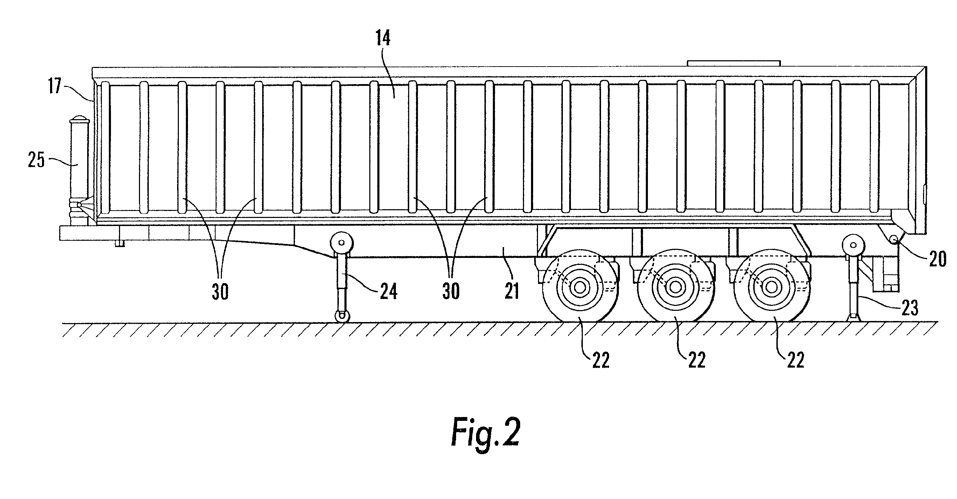

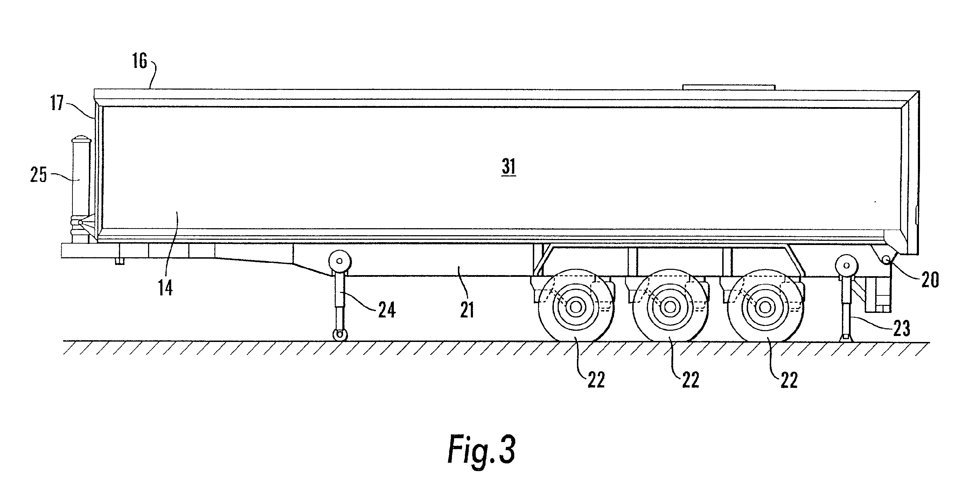

One embodiment of a container 13 is shown in Figure 2 and is typically formed from 5mm aluminium alloy plate and includes reinforcing members 30 spaced at approximately 400mm centres. The embodiment shown in Figure 3 is identical save that, for aesthetic and streamlining reasons, the container is clad externally with an appropriate sheet material 31. The use of aluminium means that the container is equally suitable for the transportation of grain/cereals. Indeed the inventive system will find use in the delivery of products to, for example, supermarkets. Supermarkets produce a large quantity of paper and cardboard waste which is presently compacted into small containers in the same manner as in the waste newsprint industry. In this regard, it will be apparent that the trailer could also be refrigerated.

Typically, the container 13 is around 13m long, 2.55m wide and 2.5m tall.

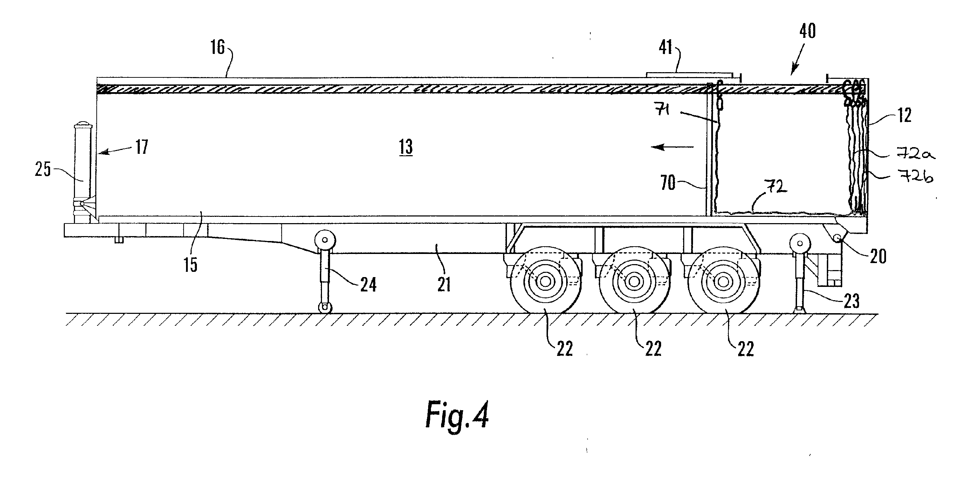

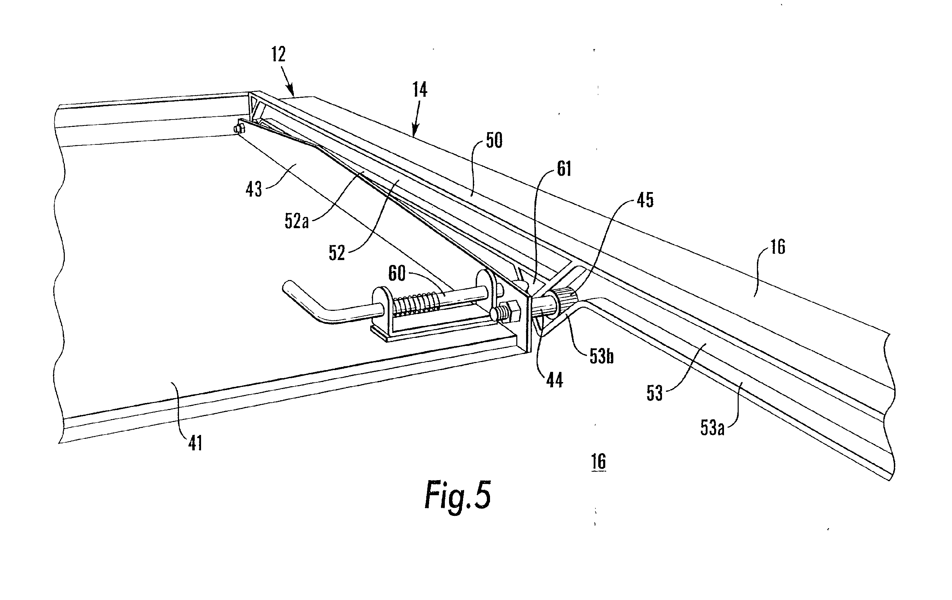

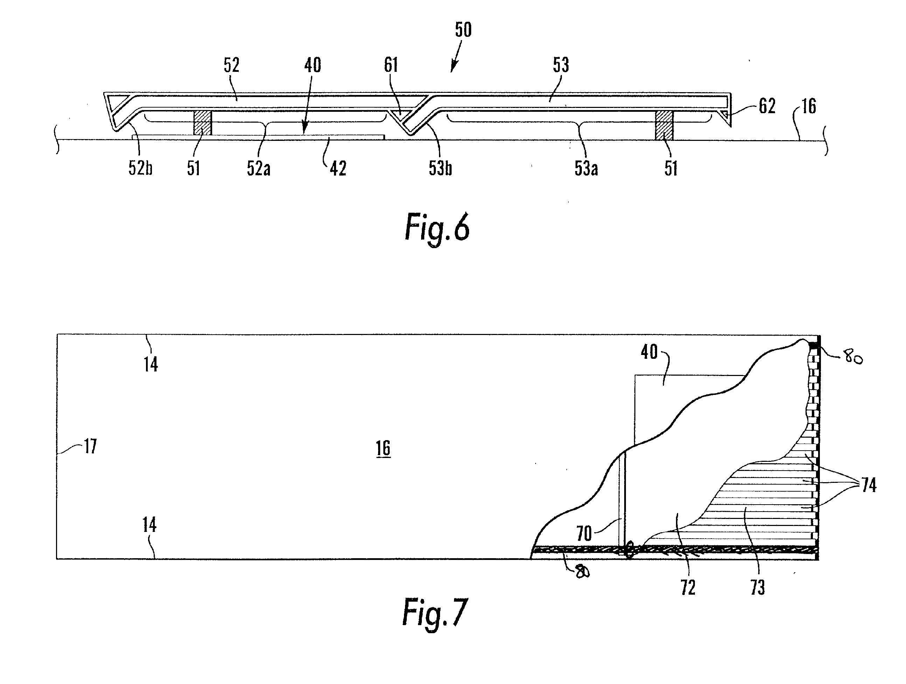

As is most clearly seen from Figures 4 and 5, the roof 16 of the trailer includes a hatch comprising an aperture 40 coverable by a horizontally slidable cover 41. The cover 41 forms a water-tight seal around the aperture 40. Those skilled in the art will be readily able to devise suitable water-tight arrangements. In the embodiment shown, a compressible rubber seal 42 (Figure 6) is provided around the periphery of the aperture 40. The cover 41 is arranged to slide into position over the aperture 40 and then down to compress the seal 42 by means of an assembly as will now be described with reference to Figures 5 and 6.

The cover 41 is provided with an upstanding lip 43 on each side. Each lip carries an outwardly projecting axle 44 towards each end thereof. Each axle carries a wheel 45.

A channel assembly 50 is mounted upon the roof 16 of the trailer and spaced therefrom by spacers 51. The channel assembly 50 includes two separate inwardly directed co-axial channels 52,53. Each channel 52, 53 includes a horizontal portion 52a,53 a which terminates at its end adjacent the front of the trailer in an inclined portion 52b,53b. Figures 5 and 6 show the left-hand channel assembly 50 (as viewed facing the doors 12 of the trailer). The right-hand assembly 50 is the mirror image.

Each channel 52,53 is associated with a respective wheel 45 of the cover 41. As will be appreciated, the cover 41 is closed by rolling horizontally along the channels 52a,53a before being biased by means of the inclined portions 52b,53b downwardly and against the rubber seal 42 around the aperture 40. Opening is the reverse operation.

In the embodiment shown, the cover 41 is manually operated and secured into either the open or closed positions by means of a bolt 60 mounted upon the cover 41 engaging corresponding front 61 and rear 62 recesses formed in the channel assembly 50. However, in the preferred embodiments, the cover 41 is remotely operated, such as by means of a hydraulic or pneumatic ram coupled to the cover or by means of an electric motor. In such cases, the inclusion of a bolt is unnecessary.

Within the trailer is transverse wall or headboard 70 (Figures 4 and 7) which is arranged by suitable means to be advanceable towards the rear wall 17 of the trailer in the direction shown by the arrow in Figure 4. The headboard 70 divides the container 13 to form a cavity 71 with the of the trailer (namely with the doors 12).

The floor of the trailer is provided with a walking floor 73 of the type described above. The walking floor comprises a series of parallel longitudinal slats 74. The slats 74 are arranged to move back and forth with a reciprocating motion, alternate slats 74 moving in opposite directions. Such floors are well known in the art and will not be described in any further detail.

The improvement provided by the present invention will now be described in further detail. With reference to Figures 4 and 7, a rail 80 is provided at each side of the interior of the trailer internally adjacent the roof thereof. Suspended from the rails 80 are a plurality of bags or sacks 72. The bags are generally the same width and height as the interior of the trailer. Their depth, front to back, is generally, but not essentially, of similar dimensions to the width. The sacks are suitably of similar design and construction to those used for transport of bulk builders' materials such as sand and are typically made from natural or synthetic hessian materials. The sacks are suitably suspended from the rails by means of hooks adapted to run along the rails engaging loops provided in each corner of each sack. It will be appreciated that a rail and hook arrangement can readily be replaced by a track arrangement in which the sacks are suspended from the track by a wheeled carriage arrangement or other slidable assembly.

In the preferred embodiments, additional means are provided to arrange that as one sack is moved rearwardly from being adjacent the front access doors 12, the adjacent back is pulled open.

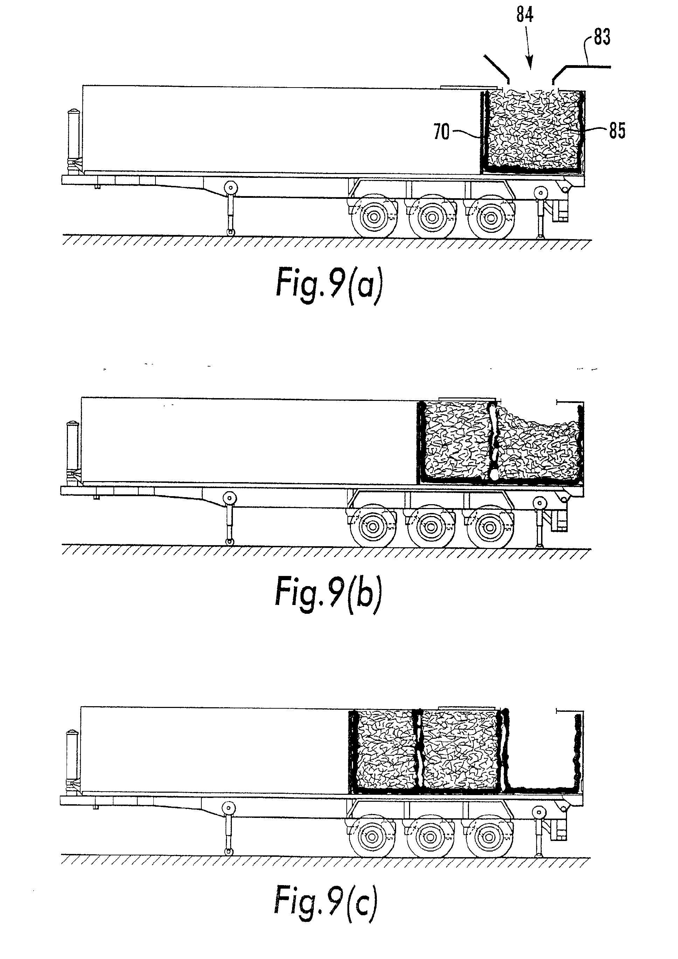

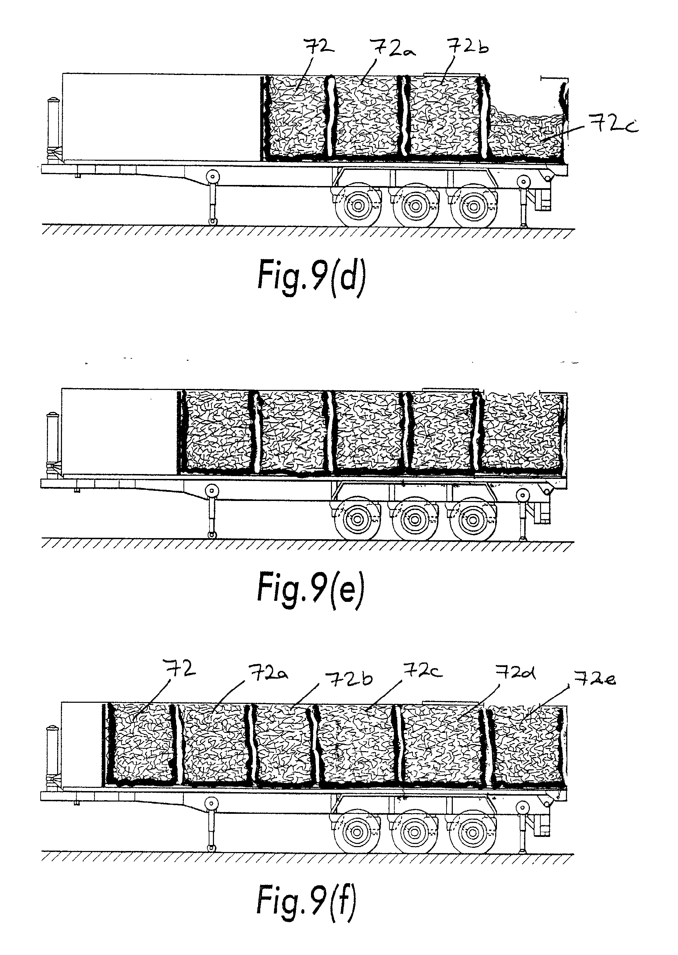

With particular reference to Figures 8 and 9, the process of the present invention will now be explained. A lorry comprising a tractor unit 10 and a first trailer 11A carrying newsprint reels 80 reverses up to a loading bay 81, of a printing works 82 whereupon the reels are unloaded through doors 12 by means of the walking floor. Newspaper waste is removed from the printing process and delivered along a discharge pathway 83 (which is illustrated only schematically) to a hopper 84. Hopper 84 discharges into a second trailer 11B of identical design to first trailer 11A, positioned underneath the hopper 84 through open aperture 40 of the hatch in the roof 16 oftrailer 11B. Second trailer 11B remains in place on site at the printing works whilst the discharging process is ongoing.

The process operates as follows. A fully laden lorry arrives and discharges its load. It then proceeds to the waste exit area of the works 82 where the tractor unit deposits the now empty trailer under the hopper 84 for receipt of waste material and retrieves the filled trailer which it then returns to its home depot or elsewhere for disposal. The process is repeated on each subsequent visit.

In a typical arrangement, however, the printing works 82 will have several hoppers 84 with associated discharge pathways 83.

Initially, the transverse headboard 70 will be at the position indicated in Figures 4, 7 and 9a. The hopper 84 discharges waste paper 85 though open aperture 40 into the cavity 71 of the trailer where it falls into a first hessian sack 72.

As sack 72 becomes full, one or more sensors (not shown) mounted about the aperture 40 trigger a control mechanism which actuates the walking floor 73 for a predetermined time to move the first sack 72 towards the rear wall 17. The mechanism by which the sacks are suspended from the track or rail 80 automatically causes the next sack 72 to be opened underneath the aperture 40. Typically this is achieved by an arrangement which retains hold of the suspension means of the front wall of the sack, whilst the rear wall is pulled rearwardly as the first sack is walked in the direction of the rear of the trailer.

The process is repeated (Figures 9a-e) with the headboard 70 indexing backwardly towards the rear wall 17 of the trailer until each sack 72, 72a, 72b, 72c, 72d and 72e has been filled (Figure 9f). Typically, this will involve 5 or 6 indexing steps, but this will depend upon the dimensions of the trailer and upon the chosen dimensions of the sacks

The hatch is then closed and the trailer is then ready to be collected on the next visit of the lorry delivering newsprint. At the site where the waste paper is to be discharged, for example at a landfill site or recycling plant, the trailer discharges the waste by means of the walking floor operating in the reverse direction or by means of tipping the container about pivot point 20 by means of ram 25.

The sacks 72 can be loaded directly onto the vessel for transportation to the recycling plant. There is no need for the waste to be separately baled. Typically, the sacks are closable to prevent loss of material and damage from the elements. For example, the upper edge of each sack may be provided with a drawstring closure means, or a cover flap.

The sacks 72 are recyclable. Thus costs are saved in both time, manpower and in terms of materials, machinery and site costs used in the conventional baling processes. It is estimated that a bag of generally square plan view for the width of a conventional trailer and of the height of a conventional trailer will hold around 2 tonnes of waste paper and that around 5 or 6 such bags could be held within a trailer of generally standard proportions.

The bags can also be used separately from the trailer, for example in a print works under paper shredders, by means of a corresponding rail or track assembly supported by a gantry. The bags can then be removed using a trailer as described above, or by using a conventional solid roofed trailer.

Whilst attached to the tractor unit 10, the walking floor 73 and the cover 41 closing assembly can be powered by the tractor unit. However, when detached from the tractor unit 10, these components will be powered by means of an on-site power plant at the works 82.

The present invention reduces the number of on site operations required, avoids the need for raising and lowering heavy containers loaded with waste materials and allows removal of waste to be effected in a straightforward, quick, efficient and cost-effective manner. The present invention also significantly reduces road movements, in ideal cases by 50%. Additionally, in the preferred embodiment, the safety of road delivery is enhanced by the metal construction of the trailer. Furthermore, the present invention can result in capital cost savings by avoiding the need for compactors at the production site, and their ongoing running and maintenance costs.
Whilst having been described with reference to the paper industries, it will be appreciated that the aspects of the present invention are equally suitable for use in other industries, for example in removal of clinical waste. As during use, access into the container is solely via the hatch in the roof, the present invention provides improved hazard security and safety.

## Claims

1. A trailer comprising a container having a floor, two side walls, a roof, a wall at a first end of the container and at least one access door at a second end of the container; **characterised in that** a plurality of parallel tracks or rails are mounted within the container generally adjacent the roof thereof and running substantially the whole length of the roof.

2. A trailer as claimed in Claim 1 further comprising at least one bag, the bag being open at the top and being so dimensioned in width and height as to correspond generally to the height and width of the trailer.

3. A trailer as claimed in Claim 2 comprising a plurality of bags and means for securing the bags to the rails in a manner such that the bags are movable from a first configuration in which all the bags are closed and compressed against each other adjacent the rear doors of the trailer to a second configuration in which the bags are all open with the rear wall of a first bag being substantially adjacent the end wall of the trailer and the front wall of a final bag being substantially adjacent the at least one access door.

4. A trailer as claimed in any one of claims 1 to 3 further including an aperture in the roof thereof at a position generally adjacent said second end of the container, said aperture being closable by means of a slidable cover.

5. A trailer as claimed in any preceding claim wherein the tracks or rails are adapted to extend through the at least one access door when open.

6. A trailer as claimed in any preceding claim, further including a walking floor.
